# FASCICULE DE BREVET EUROPEEN

(11) **EP 4 063 225 B1**
(45) Date de publication et mention de la délivrance du brevet: **10.01.2024**
(21) Numéro de dépôt: 22163181.5
(22) Date de dépôt: 21.03.2022
(51) Int. Cl.: B61D 33/00, B60N 2/015

(54) **ASSEMBLAGE D ÉQUIPEMENT INTÉRIEUR POUR VÉHICULE FERROVIAIRE À FIXATION RAPIDE**
MONTAGE VON INNENAUSSTATTUNGEN FÜR SCHIENENFAHRZEUGE MIT SCHNELLBEFESTIGUNG
ASSEMBLY OF INTERIOR EQUIPMENT FOR A RAILWAY VEHICLE WITH QUICK ATTACHMENT

(30) Priorité: 23.03.2021 FR 2102908
(43) Date de publication de la demande: 28.09.2022
(73) Titulaire: SNCF Voyageurs, 93200 Saint-Denis (FR)
(72) Inventeur: PETAIN, Jean-Pierre, 67310 Romanswiller (FR); SPITZ, Thomas, 67230 Sand (FR); WEIBEL, Jérôme, 67240 Oberhoffen sur Moder (FR)
(74) Mandataire: Bringer IP

(56) Documents cités:
- EP-A1- 3 461 684
- CN-A- 111 791 908
- CN-U- 203 727 395
- CN-U- 209 938 601
- DE-A1-102015 205 692

## Description

### Domaine technique de l'invention

L'invention concerne un assemblage d'équipement intérieur pour véhicule. En particulier, l'invention concerne un assemblage d'équipement intérieur pour véhicule ferroviaire, en particulier un assemblage de siège, en particulier pour une installation dans une voiture ferroviaire dédié au transport de passagers.

Un tel assemblage est par exemple divulgué par le document EP 3461684 A1.

### Arrière-plan technologique

Les véhicules ferroviaires accueillant des passagers sont équipés d'équipement intérieur, en particulier de sièges formant des places assises permettant d'accueillir ces passagers. Ces sièges sont disposés généralement par rangées, chaque rangée comprenant au moins un siège, souvent un, deux ou trois sièges, parfois davantage.

Lors de la fabrication d'un véhicule ferroviaire d'un train transportant des passagers, les sièges sont installés selon différentes méthodes. Généralement, le ou les sièges sont fabriqués et livrés pour installation dans leur forme préassemblée comprenant un bâti et des éléments de confort : le bâti sert à la fixation du ou des sièges au le véhicule ferroviaire, et les éléments de confort servent à l'installation du passager en position assise et à son confort pendant le transport.

Le bâti et les éléments de confort préassemblés sont installés en transportant l'ensemble de la rangée dans le véhicule ferroviaire en cours de fabrication ou de rénovation. L'ensemble de la rangée est ensuite mis en position dans le véhicule ferroviaire et fixé au véhicule ferroviaire.

Ce procédé de montage présente un grand nombre d'inconvénients.

D'une part, la livraison des rangées préassemblés est complexe car les sièges occupent un espace important dans les conteneurs de transports, tout en laissant beaucoup d'espace vide du fait de la difficulté à optimiser les formes complexes que forment les rangées.

Ensuite, l'installation des sièges et complexe et demande une logistique importante : l'utilisation de préhenseurs est indispensable du fait de la masse et de l'encombrement des rangées, et le déplacement des rangées est complexe dans les emplacements exigus dans le véhicule ferroviaire, par exemple les couloirs ou les zones où sont déjà installés d'autres sièges. En outre, la fixation de la rangée au véhicule ferroviaire est complexe, et nécessite parfois aux opérateurs d'adopter des poses inconfortables ou dangereuses (risque de coincement en cours d'installation).

Enfin, la maintenance du véhicule ferroviaire est complexifiée, car la rangée entière doit être démontée pour accéder à certaines parties du véhicule ou pour intervenir sur la rangée elle-même.

En outre, le démontage de la rangée entière est nécessaire pour remplacer les sièges par d'autres équipements intérieurs.

Tous ces inconvénients sont présents quel que soit le nombre de siège dans la rangée, mais sont d'autant plus important que le nombre de siège est important.

Les inventeurs ont cherché une solution pour permettre d'améliorer la logistique, l'installation et la maintenance des sièges du véhicule ferroviaire.

### Objectifs de l'invention

L'invention vise à fournir un assemblage d'équipement intérieur pour véhicule ferroviaire.

L'invention vise en particulier à fournir, dans au moins un mode de réalisation, un assemblage d'équipement intérieur dont la logistique de transport jusqu'au lieu d'installation est simplifiée.

L'invention vise aussi à fournir, dans au moins un mode de réalisation de l'invention, un assemblage d'équipement intérieur pouvant être manipulé simplement sur son lieu d'installation.

L'invention vise aussi à fournir, dans au moins un mode de réalisation de l'invention, un assemblage d'équipement intérieur permettant de réduire les contraintes d'installation, notamment pour les opérateurs.

L'invention vise aussi à fournir, dans au moins un mode de réalisation de l'invention, un assemblage d'équipement intérieur facilitant la maintenance du véhicule ferroviaire dans sa globalité.

### Exposé de l'invention

Pour ce faire, l'invention concerne un assemblage d'équipement intérieur pour véhicule, notamment ferroviaire, caractérisé en ce qu'il comprend :
- au moins une coque comprenant une assise, configurée pour qu'un passager dudit véhicule puisse prendre une position assise,
- un bâti comprenant une poutre configurée pour recevoir chaque coque, au moins un pied relié à la poutre et configuré pour former un appui au sol lorsque le bâti est installé dans le véhicule, et des moyens de fixation de la poutre à une paroi du véhicule,
- pour chaque coque, un système de fixation rapide comprenant au moins un épaulement agencé sur la poutre du bâti, au moins une languette agencée dans la partie basse de l'assise de chaque coque et configurée pour un emmanchement avec l'épaulement, et des moyens de verrouillage de chaque coque avec le bâti.

Un assemblage d'équipement intérieur selon l'invention permet donc un stockage, une manutention et une installation simplifiée. En particulier, la séparation du bâti et de la coque permet de réduire les contraintes de stockage, ces éléments pouvant être stockés à part, dans des conteneurs classiques, en occupant un volume moins important.

L'équipement intérieur est généralement un siège dans un véhicule ferroviaire destiné au transport de passager, mais peut également être, selon les besoins, une clayette à bagages classiques, un rangement pour bagages spécifiques (porte-ski, rangement pour vélos, etc.), un brancard (aussi appelé civière) pour un transport de patients, par exemple pour un train sanitaire, etc.

En outre, la manutention de chacun de ces éléments est simplifiée jusqu'au lieu d'installation, du fait d'un poids réduit de chaque élément par rapport à un ensemble formé d'un seul bloc de l'art antérieur. En particulier, la manutention peut s'effectuer sans nécessiter d'outil préhenseur spécialisé.

Enfin, l'installation est simplifiée : le bâti peut être installé simplement au véhicule ferroviaire, puis la coque est installée sur le bâti grâce au système de fixation rapide. L'installation ne nécessite pas d'outillage spécialisé, et peut être effectuée avec moins d'opérateurs. Les opérateurs ont une accessibilité facilitée aux éléments à assembler ce qui évite les positions inconfortables.

De même, lors d'une maintenance sur l'assemblage d'équipement intérieur ou sur le véhicule ferroviaire, la coque seule peut être facilement démontée sans nécessiter de démonter le bâti. En outre, dans un assemblage d'équipement intérieur comprenant plusieurs coques pour permettre par exemple l'assise de plusieurs passagers, chaque coque peut être démontée indépendamment des autres.

Le bâti forme une surface plane permettant une résistance mécanique accrue lorsqu'un équipement d'intérieur est installé. Un équipement d'intérieur peut comprendre plusieurs coques, chacune installée sur un bâti différent lorsque ses dimensions le nécessitent. Par exemple, un brancard peut comprendre deux coques être installé sur une longueur nécessitant l'emploi de deux bâtis. Dans l'art antérieur, les brancards d'un train sanitaire étaient fixés sur des surfaces non prévues de sièges pour porter ces brancards ce qui entraînait des contraintes mécaniques risquant de dégrader prématurément ces surfaces.

L'invention ne se limite pas au contexte ferroviaire et peut être mise en oeuvre dans d'autres mode de transports de passager, notamment dans un aéronef ou un véhicule routier.

Avantageusement et selon l'invention, les moyens de fixation de la poutre à la paroi sont une équerre s'étendant sensiblement perpendiculairement à la poutre.

Selon cet aspect de l'invention, l'équerre permet une fixation solide sur la paroi du véhicule, permettant une stabilité du bâti au vu des forces exercées sur l'assemblage d'équipement intérieur notamment sur l'assemblage de siège lors de son utilisation par des passagers.

Selon d'autres variantes de l'invention, les moyens de fixation de la poutre à la paroi sont un deuxième pied, la paroi du véhicule sur laquelle est fixée le bâti étant le sol.

Avantageusement et selon l'invention, les moyens de verrouillage de chaque coque avec le bâti sont choisis parmi la liste suivante :
- un levier sur ressort agencé sur la coque configuré pour s'enclencher avec une lame de verrouillage agencée sur le bâti ;
- une lame ressort fixée sur la coque et configurée pour verrouiller automatiquement la coque et la poutre du bâti ;
- un système de loquet, une première partie du loquet comprenant une goupille mobile agencée sur le bâti et contrainte en extension par un ressort, et une deuxième partie du loquet comprenant une plaque comprenant un trou et fixée sur la coque, ladite plaque étant configurée pour pousser sur la goupille jusqu'à ce que la goupille soit alignée avec le trou de la plaque de sorte que la goupille s'emmanche avec le trou par détente du ressort ;
- un verrou de type loquet de verrouillage, comprenant un tube agencé sur la coque et un loquet de verrouillage automatique agencé sur la poutre et bloquant automatiquement la tige au contact ;
- un verrou de type levier à grenouillère, configuré pour être verrouillé par actionnement d'un levier par un opérateur ;
- un arbre agencé sur la coque, comprenant une gorge en interaction avec un axe sur ressort agencé sur le bâti.

Selon cet aspect de l'invention, ces moyens de verrouillage présentent chacun des avantages et inconvénients et le choix s'effectuera selon notamment des contraintes mécaniques, pratiques et économiques.

En particulier, certaines fixations se verrouillent automatiquement lors de l'assemblage, d'autres nécessitent l'intervention d'un opérateur.

Les systèmes de fixations doivent être fiable et vérifiables facilement. De préférence, le système de fixation doit empêcher le déverrouillage par une personne non-habilitée, par exemple un passager. D'autres moyens de verrouillage non décrits peuvent être utilisés.

Avantageusement, un assemblage d'équipement intérieur selon l'invention comprend au moins un capot de protection des moyens de verrouillage.

Selon cet aspect de l'invention, le capot de protection permet de limiter l'accès aux moyens de verrouillage et ainsi limiter les risques que les moyens de verrouillage soient visibles et/ou accessibles par une personne non-habilitée, par exemple un passager.

Avantageusement et selon l'invention, le bâti comprend au moins une connectique électrique configurée pour un raccordement à une arrivée électrique du véhicule ferroviaire.

Avantageusement et selon l'invention, le bâti comprend au moins une connectique pneumatique configurée pour un raccordement à une arrivée pneumatique du véhicule ferroviaire.

Selon cet aspect de l'invention, la connexion électrique et/ou pneumatique permet l'alimentation d'équipements de l'assemblage d'équipement intérieur, comme des prises électriques, l'inclinaison du dossier, une lumière, etc.

L'invention concerne également un véhicule, notamment ferroviaire, comprenant un sol et une paroi, caractérisé en ce qu'il comprend au moins un assemblage d'équipement intérieur selon l'invention, le pied du bâti dudit assemblage d'équipement intérieur étant fixé au sol du véhicule ferroviaire et moyens de fixation de la poutre à une paroi du véhicule sont fixés à ladite paroi du véhicule

Un véhicule ferroviaire selon l'invention présente une maintenance simplifiée du fait de la possibilité de démonter facilement la ou les coques de chaque assemblage d'équipement intérieur, pour effectuer une maintenance sur ladite coque, sur l'assemblage d'équipement intérieur, en particulier un siège, ou sur le véhicule ferroviaire, par exemple en dégageant facilement l'accès à une zone à réparer située derrière une coque d'assemblage d'équipement intérieur.

Avantageusement et selon l'invention, au moins une coque comprend une assise configurée pour qu'un passager dudit véhicule puisse prendre une position assise.

Dans cette variante de l'invention, la coque, aussi appelée coque de siège, comprend au minimum l'assise mais peut comprendre une partie ou l'ensemble des éléments de conforts en un seul bloc, comme un dossier, un appui-tête, un ou plusieurs accoudoirs, les textiles de conforts (mousse d'assise et de dossier par exemple), etc., formant ainsi un siège pour un passager. Les éléments de conforts sont soit directement intégrés à la coque, soit ajouté à la coque suite à son installation sur le bâti.

Autrement dit, dans cette variante de l'invention, l'invention concerne ainsi un assemblage de siège pour véhicule, notamment ferroviaire, caractérisé en ce qu'il comprend :
- au moins une coque comprenant une assise configurée pour qu'un passager dudit véhicule puisse prendre une position assise,
- un bâti comprenant une poutre configurée pour recevoir chaque coque, au moins un pied relié à la poutre et configuré pour former un appui au sol lorsque le bâti est installé dans le véhicule, et des moyens de fixation de la poutre à une paroi du véhicule,
- pour chaque coque, un système de fixation rapide comprenant au moins un épaulement agencé sur la poutre du bâti, au moins une languette agencée dans la partie basse de l'assise de chaque coque et configurée pour un emmanchement avec l'épaulement, et des moyens de verrouillage de chaque coque avec le bâti.

L'invention concerne également un procédé d'installation d'un assemblage d'équipement intérieur selon l'invention, caractérisé en ce qu'il comprend les étapes suivantes :
- une étape de mise en place du bâti dans laquelle le pied est placé au niveau du sol, la poutre est étendue de façon sensiblement horizontale et les moyens de fixation de la poutre à la paroi du véhicule sont au contact de ladite paroi du véhicule ;
- une étape de fixation du bâti au véhicule ;
- une étape de mise en place de chaque coque sur la poutre du bâti, de sorte que la languette soit emmanchée avec l'épaulement ;
- une étape de verrouillage de chaque coque avec le bâti via les moyens de verrouillage.

Un procédé d'installation selon l'invention permet l'installation d'un assemblage d'équipement intérieur de façon simple, en mettant en place et fixant le bâti dans un premier temps, puis en mettant en place chaque coque sur la poutre du bâti déjà installé. La mise en place et la fixation du bâti est plus simple que dans l'art antérieur puisque la coque n'est pas encore présente et réduit ainsi le poids et l'encombrement de l'ensemble.

Selon une variante de l'invention, la paroi du véhicule est le sol et le bâti comprend ainsi au moins deux pieds supportant la poutre.

Avantageusement et selon l'invention, le procédé comprend :
- une étape de branchement électrique d'une première connectique électrique du bâti avec une arrivée électrique du véhicule ferroviaire ;
- une étape de branchement électrique de la première connectique électrique du bâti avec une deuxième connectique électrique sur chaque coque.

Avantageusement et selon l'invention, le procédé comprend :
- une étape de branchement pneumatique d'une première connectique pneumatique du bâti avec une arrivée pneumatique du véhicule ferroviaire ;
- une étape de branchement pneumatique de la première connectique pneumatique du bâti avec une deuxième connectique pneumatique sur chaque coque.

L'invention concerne également un assemblage d'équipement intérieur, un véhicule ferroviaire et un procédé d'installation d'un assemblage d'équipement intérieur, caractérisés en combinaison par tout ou partie des caractéristiques mentionnées ci-dessus ou ci-après.

### Liste des figures

D'autres buts, caractéristiques et avantages de l'invention apparaîtront à la lecture de la description suivante donnée à titre uniquement non limitatif et qui se réfère aux figures annexées dans lesquelles :
[Fig. 1] est une vue schématique de derrière d'un assemblage d'équipement intérieur selon un premier mode de réalisation de l'invention ;
[Fig. 2] est une vue schématique de côté d'un assemblage d'équipement intérieur selon un premier mode de réalisation de l'invention ;
[Fig. 2a] est une vue agrandie d'une partie de la figure 2.
[Fig. 3] est une vue schématique de côté d'un assemblage d'équipement intérieur selon un deuxième mode de réalisation de l'invention.
[Fig. 4] est une vue schématique de côté d'un assemblage d'équipement intérieur selon un troisième mode de réalisation de l'invention.

### Description détaillée d'un mode de réalisation de l'invention

Sur les figures, les échelles et les proportions ne sont pas strictement respectées et ce, à des fins d'illustration et de clarté.

En outre, les éléments identiques, similaires ou analogues sont désignés par les mêmes références dans toutes les figures.

Les termes « horizontal », « vertical » ou dérivés s'interprètent de façon relative lorsque l'assemblage d'équipement intérieur est installé dans le véhicule ferroviaire, adapté pour recevoir un passager en position assise. Lorsque l'assemblage d'équipement intérieur n'est pas installé dans le véhicule ferroviaire, par exemple pour un transport de livraison ou un stockage, les éléments peuvent prendre une orientation différente.

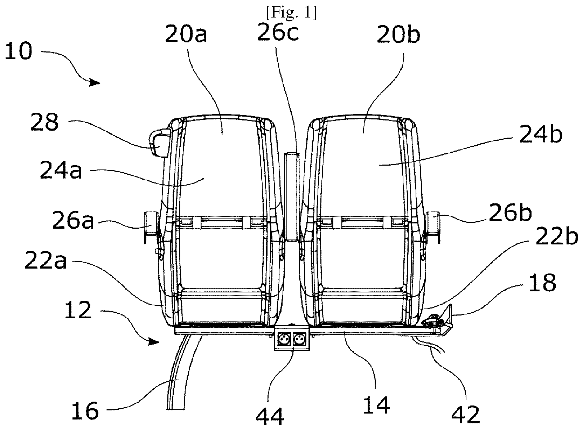

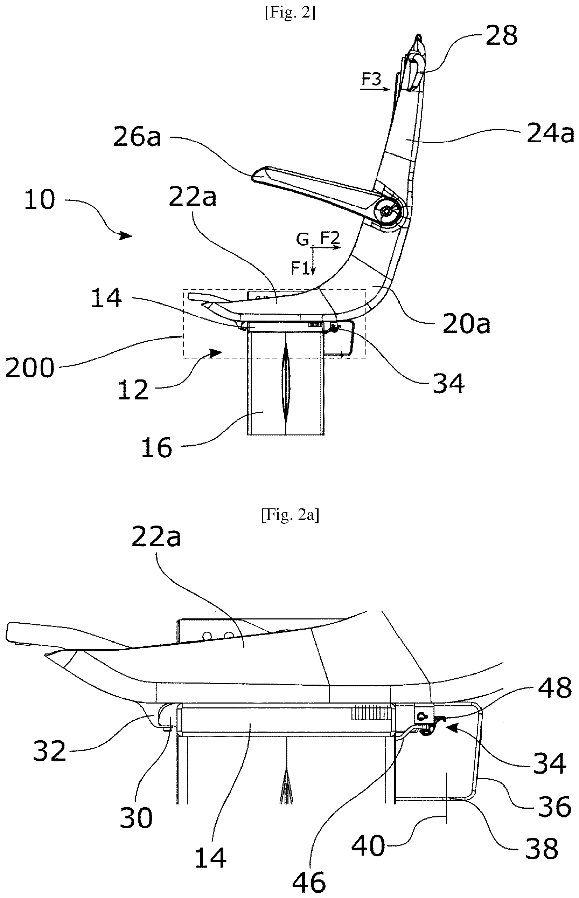

La figure 1 et la figure 2 illustrent schématiquement un assemblage 10 d'un équipement intérieur, ici un assemblage de siège, selon un premier mode de réalisation de l'invention, respectivement en vue de derrière et de côté, destiné à être installé dans un véhicule ferroviaire.

L'assemblage 10 de siège comprend un bâti 12, comprenant une poutre 14, un pied 16 et des moyens de fixation de la poutre à une paroi du véhicule, ici une équerre 18.

La poutre 14 s'étend de façon sensiblement horizontale quand elle est installée dans un véhicule ferroviaire. La poutre 14 permet de supporter une ou plusieurs coques, ici une première coque 20a et une deuxième coque 20b permettant de recevoir un passager en place assise. Selon d'autres modes de réalisation de l'invention, la poutre peut être plus courte pour ne recevoir qu'une seule coque, ou bien plus longue pour recevoir davantage de coques.

Le pied 16 permet un appui au sol au bâti et l'équerre 18 permet de solidariser le bâti à la paroi du véhicule. Le pied 16 et l'équerre 18 permettent la stabilité du bâti en cas d'effort appliqué au bâti, en particulier le poids des coques 20a, 20b et le poids d'un passager. Le bâti est installé en premier dans le véhicule ferroviaire lorsque l'assemblage 10 de siège est installé. Pour ce faire, le bâti est mis en position pour que le pied 16 et l'équerre 18 soient disposées à leur emplacement prévu, puis le bâti est fixé au véhicule ferroviaire, par exemple via des orifices de fixation prévus sur l'équerre 18 et le pied 16 qui sont tous deux en contact du véhicule ferroviaire lorsqu'ils sont installés.

Chaque coque 20a, 20b comprend une assise 22a, 22b permettant à un passager du véhicule de s'asseoir. Chaque coque 20a, 20b comprend également un dossier 24a, 24b permettant au passager en position assise d'appuyer son dos, ainsi que d'autres éléments de confort, par exemple un accoudoir 26a, 26b, 26c, une poignée 28, une tablette rangée dans le dossier, etc.

Comme visible sur la figure 1, l'assemblage 10 de siège peut également comprendre des connectiques électrique et/ou pneumatiques, permettant une alimentation électrique et/ou pneumatique à partir d'une arrivée électrique et/ou une arrivée pneumatique disponible dans le véhicule ferroviaire. Une première connectique 42 permet de connecter le bâti à une arrivée, et une deuxième connectique (non représentée) permet de connecter le bâti à la coque si nécessaire. La première connectique peut être facilement mise en place lorsque la coque n'est pas encore installée.

Les connectiques électriques permettent de fournir un accès à une prise 44 électrique a un passager, ou à fournir de l'énergie à un équipement électrique de l'assemblage 10 de siège. Les connectiques pneumatiques peuvent permettre d'actionner des éléments mobiles de l'assemblage 10 de siège, par exemple l'angle du dossier.

La figure 2a représente un agrandissement de la zone 200 de la figure 2, dans laquelle est visible l'assise 22a d'une des coques et la poutre 14.

L'assemblage 10 de siège comprend un système de fixation rapide, permettant d'installer facilement la coque sur la poutre 14 du bâti une fois le bâti installé dans le véhicule ferroviaire. Le système de fixation rapide comprend un épaulement 30 agencé sur la poutre 14 du bâti, et une languette 32 agencée dans la partie basse de l'assise 22a. L'épaulement 30 et la languette 32 sont configurés pour s'emmancher lors de l'installation de la coque : la coque peut être mise au contact du bâti de sorte à ce que l'épaulement 30 et la languette 32 soient en contact et lorsque la coque est déposée sur la poutre 14 du bâti, l'épaulement 30 et la languette 32 sont emmanchées. La position latérale de chaque coque sur la poutre peut être ajustée par la suite.

Dans ce mode de réalisation, la languette 32 est agencée sur l'avant de l'assise, mais dans d'autres modes de réalisation, la languette peut être agencée à l'arrière de l'assise ou bien la coque peut comprendre deux languettes pour s'adapter à différents types de bâti. De même, dans ce mode de réalisation, l'épaulement 30 est disposé sur l'avant de la poutre, mais dans d'autres modes de réalisation, l'épaulement peut être agencé à l'arrière de la poutre ou bien la poutre peut comprendre deux épaulements pour s'adapter à différents types de coques.

L'emmanchement de la languette 32 et de l'épaulement 30 est configuré pour la transmission de la coque au bâti d'efforts appliqués à la coque sans détérioration, en particulier des efforts F1 défini dans la norme française NF F 31-119, et des efforts F2 et F3 définis dans la norme européenne EN 12663. Comme visible sur la figure 2, l'effort F1 définit un effort vertical vers le bas à partir du centre de gravité G du passager, l'effort F2 définit un effort horizontal vers le dossier à partir du centre de gravité G du passager, l'effort F3 définit un effort horizontal vers l'appui-tête. L'emmanchement permet en outre d'absorber les vibrations définies dans la norme européenne EN 61373 sans détérioration.

Pour permettre de fiabiliser l'installation de chaque coque sur le bâti, chaque système de fixation rapide comprend des moyens 34 de verrouillage de chaque coque avec le bâti. Les moyens 34 de verrouillage peuvent permettre de s'assurer que la coque est bien solidaire avec le bâti et que la coque n'est pas démontable par une personne non autorisée. Pour réduire les risques de déverrouillage non-autorisés ou accidentels, l'assemblage de siège peut comprendre, pour chaque coque, un capot 36 de protection des moyens de verrouillage. Le capot 36 de protection peut comprendre un orifice 38 permettant le passage d'un outil 40 permettant par exemple de retirer le capot 36 de protection ou d'intervenir directement sur les moyens 34 de verrouillage, par exemple pour les déverrouiller.

Dans le mode de réalisation représenté, visible en particulier sur la figure 2a, les moyens 34 de verrouillage comprennent une lame 46 de verrouillage fixée sur la poutre 14, permettant le blocage d'un levier 48 sur ressort agencé sur la coque 20a. La présence du ressort sur le levier permet un blocage automatique du levier 48 avec la lame 46 de verrouillage lorsque la coque est assemblée à la poutre 14 du bâti, sans nécessiter d'outils. L'outil 40 peut déverrouiller le levier 48 en passant par l'orifice 38.

Selon d'autres modes de réalisation, les moyens 34 de verrouillage peuvent être de différents types, par exemple :
- une lame ressort fixée sur la coque et configurée pour verrouiller automatiquement la coque et la poutre du bâti ;
- un système de loquet, une première partie du loquet étant fixée sur la coque et une deuxième partie du loquet étant fixée sur la poutre ;
- un verrou type table, comprenant un tube agencé sur la coque et un loquet de verrouillage automatique agencé sur la poutre et bloquant automatiquement la tige au contact ;
- un verrou de type levier à grenouillère, configuré pour être verrouillé par actionnement d'un levier par un opérateur ;
- un arbre agencé sur la coque, comprenant une gorge en interaction avec un axe sur ressort agencé sur le bâti.

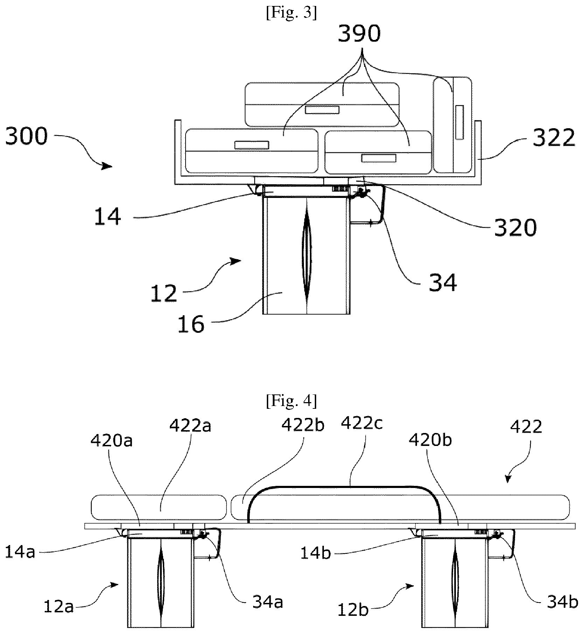

La figure 3 représente schématiquement de côté un assemblage d'un équipement intérieur selon un deuxième mode de réalisation de l'invention, destiné à servir de porte-bagage dans un véhicule ferroviaire.

La figure 4 représente schématiquement de côté un assemblage d'un équipement intérieur selon un troisième mode de réalisation de l'invention, destiné à servir de brancard pour l'installation dans un véhicule ferroviaire, notamment pour la mise en place de train sanitaire.

Le deuxième et le troisième mode de réalisation sont similaires au premier mode de réalisation décrit en référence aux figures 1, 2 et 2a, mais dans lesquels les coques 320, 420 sont destinés à des équipements intérieurs différents. En particulier, le bâti 12, comprenant la poutre 14 et le pied 16, et les moyens 34 de verrouillage sont identiques au premier mode de réalisation, bien qu'ils puissent être différents dans d'autres modes de réalisation non représentés.

Dans le deuxième mode de réalisation décrit en référence à la figure 3, la coque 320 est configurée pour recevoir une clayette 322 à bagage, permettant à des passagers du véhicule de déposer leurs bagages 390.

Dans le troisième mode de réalisation décrit en référence à la figure 4, la coque 420 est configurée pour s'adapter sur les poutres 14a, 14b de deux bâtis 12a, 12b, grâce à deux moyens 34a, 34b de verrouillage, afin de porter un brancard 422 porté par les deux bâtis 12a, 12b. Le brancard, ou civière, comprend par exemple une zone 422a matelassée pour recevoir la tête d'un patient, une zone 422b matelassée pour recevoir le corps d'un patient et des poignées 422c pour le transport et le déplacement.

L'invention ne se limite pas aux modes de réalisation décrits. En particulier, l'invention peut être mise en oeuvre dans d'autres types de véhicules, par exemple des aéronefs ou des véhicules routiers.

## Revendications

1. Assemblage d'équipement intérieur pour véhicule, notamment ferroviaire, comprenant:
- au moins une coque (20a, 20b) configurée pour recevoir au moins un élément (22a, 22b, 322, 422) constitutif d'un équipement intérieur,
- un bâti (12) comprenant une poutre (14) configurée pour recevoir chaque coque (20a, 20b), au moins un pied (16) relié à la poutre (14) et configuré pour former un appui au sol lorsque le bâti (12) est installé dans le véhicule, et des moyens (18) de fixation de la poutre (14) à une paroi du véhicule,
**caractérisé en ce que**
- pour chaque coque (20a, 20b), un système de fixation rapide comprenant au moins un épaulement (30) agencé sur la poutre (14) du bâti (12), au moins une languette (32) agencée dans la partie basse de chaque coque (20a, 20b) et configurée pour un emmanchement avec l'épaulement (30), et des moyens (34) de verrouillage de chaque coque (20a, 20b) avec le bâti (12).

2. Assemblage d'équipement intérieur selon la revendication 1, **caractérisé en ce que** les moyens de fixation de la poutre (14) à la paroi sont une équerre (18) s'étendant sensiblement perpendiculairement à la poutre (14).

3. Assemblage d'équipement intérieur selon l'une des revendications 1 ou 2, **caractérisé en ce que** les moyens (34) de verrouillage de chaque coque avec le bâti (12) sont choisis parmi la liste suivante :
- un levier (48) sur ressort agencé sur la coque (20a, 20b) configuré pour s'enclencher avec une lame (46) de verrouillage agencée sur le bâti (12) ;
- une lame ressort fixée sur la coque et configurée pour verrouiller automatiquement la coque et la poutre du bâti ;
- un système de loquet, une première partie du loquet comprenant une goupille mobile agencée sur le bâti et contrainte en extension par un ressort, et une deuxième partie du loquet comprenant une plaque comprenant un trou et fixée sur la coque, ladite plaque étant configurée pour pousser sur la goupille jusqu'à ce que la goupille soit alignée avec le trou de la plaque de sorte que la goupille s'emmanche avec le trou par détente du ressort ;
- un verrou type table, comprenant un tube agencé sur la coque et un loquet de verrouillage automatique agencé sur la poutre et bloquant automatiquement la tige au contact ;
- un verrou grenouillère, configuré pour être verrouillé par actionnement d'un levier par un opérateur ;
- un arbre agencé sur la coque, comprenant une gorge en interaction avec un axe sur ressort agencé sur le bâti.

4. Assemblage d'équipement intérieur selon l'une des revendications 1 à 3, **caractérisé en ce qu'**il comprend au moins un capot (36) de protection des moyens (34) de verrouillage.

5. Assemblage d'équipement intérieur selon l'une des revendications 1 à 4, **caractérisé en ce que** le bâti (12) comprend au moins une connectique (42) électrique configurée pour un raccordement à une arrivée électrique du véhicule ferroviaire.

6. Assemblage d'équipement intérieur selon l'une des revendications 1 à 5, **caractérisé en ce que** le bâti comprend au moins une connectique (42) pneumatique configurée pour un raccordement à une arrivée pneumatique du véhicule ferroviaire.

7. Assemblage d'équipement intérieur selon l'une des revendications 1 à 6, **caractérisé en ce qu'**au moins une coque comprend une assise (22a, 22b) configurée pour qu'un passager dudit véhicule puisse prendre une position assise.

8. Véhicule, notamment ferroviaire, comprenant un sol et une paroi, **caractérisé en ce qu'**il comprend au moins un assemblage (10) d'équipement intérieur selon l'une des revendications 1 à 7, le pied (16) du bâti dudit assemblage de siège étant fixé au sol du véhicule ferroviaire et moyens (18) de fixation de la poutre à une paroi du véhicule sont fixés à ladite paroi du véhicule.

9. Procédé d'installation d'un assemblage d'équipement intérieur selon l'une des revendications 1 à 8, **caractérisé en ce qu'**il comprend les étapes suivantes :
- une étape de mise en place du bâti (12) dans laquelle le pied (16) est placé au niveau du sol, la poutre (14) est étendue de façon sensiblement horizontale et les moyens (18) de fixation de la poutre à la paroi du véhicule sont au contact de ladite paroi du véhicule ;
- une étape de fixation du bâti (12) au véhicule ;
- une étape de mise en place de chaque coque (20a, 20b) sur la poutre (14) du bâti, de sorte que la languette (32) soit emmanchée avec l'épaulement (30) ;
- une étape de verrouillage de chaque coque (20a, 20b) avec le bâti (12) via les moyens (34) de verrouillage.

10. Procédé d'installation selon la revendication 9, **caractérisé en ce qu'**il comprend :
- une étape de branchement électrique d'une première connectique électrique du bâti avec une arrivée électrique du véhicule ferroviaire ;
- une étape de branchement électrique de la première connectique électrique du bâti avec une deuxième connectique électrique sur chaque coque.

11. Procédé d'installation selon l'une des revendications 9 ou 10, **caractérisé en ce qu'**il comprend :
- une étape de branchement pneumatique d'une première connectique pneumatique du bâti avec une arrivée pneumatique du véhicule ferroviaire ;
- une étape de branchement pneumatique de la première connectique pneumatique du bâti avec une deuxième connectique pneumatique sur chaque coque.

## Patentansprüche

1. Innenausstattungseinheit für ein Fahrzeug, insbesondere ein Schienenfahrzeug, welche umfasst:
- mindestens eine Schale (20a, 20b), die ausgestaltet ist, mindestens ein Element (22a, 22b, 322, 422) aufzunehmen, das eine Innenausstattung bildet,
- ein Rahmen (12), der umfasst: einen Träger (14), der ausgestaltet ist, jede Schale (20a, 20b) aufzunehmen, mindestens einen Fuß (16), der mit dem Träger (14) verbunden ist und ausgestaltet ist, eine Stütze auf dem Boden auszubilden, wenn der Rahmen (12) in das Fahrzeug eingebaut ist, und Mittel (18) zur Befestigung des Trägers (14) an einer Wand des Fahrzeugs,
**dadurch gekennzeichnet, dass**
- für jede Schale (20a, 20b) ein Schnellbefestigungssystem, das mindestens eine Schulter (30), die auf dem Träger (14) des Rahmens (12) angeordnet ist, mindestens eine Zunge (32), die im unteren Teil jeder Schale (20a, 20b) angeordnet und zum Eingriff mit der Schulter (30) ausgestaltet ist, und Mittel (34) zum Verriegeln jeder Schale (20a, 20b) am Rahmen (12) umfasst.

2. Innenausstattungseinheit nach Anspruch 1, **dadurch gekennzeichnet, dass** das Mittel zum Befestigen des Trägers (14) an der Wand eine Klammer (18) ist, die sich im Wesentlichen senkrecht zum Träger (14) erstreckt.

3. Innenausstattungseinheit nach einem der Ansprüche 1 oder 2, **dadurch gekennzeichnet, dass** das Mittel (34) zum Verriegeln jeder Schale an dem Rahmen (12) aus der Liste ausgewählt ist:
- ein federbelasteter Hebel (48), der an der Schale (20a, 20b) angeordnet und ausgestaltet ist, mit einem am Rahmen (12) angeordneten Verriegelungsblatt (46) in Eingriff zu kommen;
- ein federbelastetes Blatt, das an der Schale befestigt und ausgestaltet ist, die Schale automatisch mit dem Träger des Rahmens zu verriegeln;
- ein Riegelsystem, worin ein erster Teil des Riegels einen beweglichen Stift umfasst, der auf dem Rahmen angeordnet und durch eine Feder in seiner Ausdehnung eingeschränkt ist, und ein zweiter Teil des Riegels eine Platte mit einem Loch umfasst, und an der Schale befestigt ist, wobei die Platte ausgestaltet ist, auf den Stift zu drücken, bis der Stift mit dem Loch in der Platte ausgerichtet ist, so dass der Stift durch Entspannung der Feder in das Loch eingreift;
- ein Tischschloss, das ein an der Schale angeordnetes Rohr und eine an dem Träger angeordnete automatische Verriegelungsklinke umfasst, die den Stift bei Kontakt automatisch blockiert;
- ein Knebelschloss, das ausgestaltet ist, von einem Bediener durch Betätigung eines Hebels verriegelt zu werden;
- ein an der Schale angeordneter Schaft, der eine Nut aufweist, die mit einem am Rahmen angeordneten federbelasteten Stift zusammenwirkt.

4. Innenausstattungseinheit nach einem der Ansprüche 1 bis 3, **dadurch gekennzeichnet, dass** diese mindestens eine Abdeckung (36) zum Schutz der Verriegelungsmittel (34) aufweist.

5. Innenausstattungseinheit nach einem der Ansprüche 1 bis 4, **dadurch gekennzeichnet, dass** der Rahmen (12) mindestens einen elektrischen Anschluss (42) umfasst, der für das Anschließen mit einem elektrischen Eingang des Schienenfahrzeugs ausgestaltet ist.

6. Innenausstattungseinheit nach einem der Ansprüche 1 bis 5, **dadurch gekennzeichnet, dass** der Rahmen mindestens einen pneumatischen Anschluss (42) umfasst, der für das Anschließen an einen pneumatischen Eingang des Schienenfahrzeugs ausgestaltet ist.

7. Innenausstattungseinheit nach einem der Ansprüche 1 bis 6, **dadurch gekennzeichnet, dass** mindestens eine Schale einen Sitz (22a, 22b) aufweist, der ausgestaltet ist, dass ein Fahrgast des Fahrzeugs eine Sitzposition einnehmen kann.

8. Fahrzeug, insbesondere Schienenfahrzeug, mit einem Boden und einer Wand, **dadurch gekennzeichnet, dass** es mindestens eine Innenausstattungseinheit (10) nach einem der Ansprüche 1 bis 7 umfasst, worin der Fuß (16) des Rahmens der Sitzeinheit am Boden des Schienenfahrzeugs befestigt ist und Mittel (18) zur Befestigung des Trägers an einer Wand des Fahrzeugs an der Wand des Fahrzeugs befestigt sind.

9. Verfahren zum Einbau einer Innenausstattungseinheit nach einem der Ansprüche 1 bis 8, **dadurch gekennzeichnet, dass** es die Schritte umfasst:
- einen Schritt des Anordnen des Rahmens (12), bei dem der Fuß (16) auf Bodenhöhe angeordnet wird, der Träger (14) sich im Wesentlichen horizontal erstreckt und die Mittel (18) zum Befestigen des Trägers an der Fahrzeugwand in Kontakt mit der Fahrzeugwand sind;
- einen Schritt zum Befestigen des Rahmens (12) am Fahrzeug;
- einen Schritt des Aufsetzens jeder Schale (20a, 20b) auf den Rahmenträger (14), so dass die Zunge (32) mit der Schulter (30) in Eingriff ist;
- einen Schritt des Verriegelns jeder Schale (20a, 20b) mit dem Rahmen (12) über das Verriegelungsmittel (34).

10. Verfahren zum Einbau nach Anspruch 9, **dadurch gekennzeichnet, dass** es umfasst:
- einen Schritt des elektrischen Anschließens eines ersten elektrischen Anschlusses des Rahmens mit einem elektrischen Eingang des Schienenfahrzeugs;
- einen Schritt des elektrischen Anschließens des ersten elektrischen Anschlusses des Rahmens mit einem zweiten elektrischen Anschluss an jeder Schale.

11. Verfahren zum Einbau nach einem der Ansprüche 9 oder 10, **dadurch gekennzeichnet, dass** es umfasst:
- einen Schritt des pneumatischen Verbindens eines ersten pneumatischen Anschlusses des Rahmens mit einem pneumatischen Eingang des Schienenfahrzeugs;
- einen Schritt des pneumatischen Verbindens des ersten pneumatischen Anschlusses des Rahmens mit einem zweiten pneumatischen Anschluss an jeder Schale.

## Claims

1. Interior equipment assembly for a vehicle, in particular a railway vehicle, comprising :
- at least one shell (20a, 20b) configured to receive at least one element (22a, 22b, 322, 422) constituting an item of interior equipment,
- a frame (12) comprising a beam (14) configured to receive each shell (20a, 20b), at least one foot (16) connected to the beam (14) and configured to form a support on the ground when the frame (12) is installed in the vehicle, and means (18) for fixing the beam (14) to a wall of the vehicle,
**characterized in that**
- for each shell (20a, 20b), a quick-fastening system comprising at least one shoulder (30) arranged on the beam (14) of the frame (12), at least one tongue (32) arranged in the lower part of each shell (20a, 20b) and configured for engagement with the shoulder (30), and means (34) for locking each shell (20a, 20b) to the frame (12).

2. Interior equipment assembly according to claim 1, **characterized in that** the means for securing the beam (14) to the wall are a bracket (18) extending substantially perpendicular to the beam (14).

3. Interior equipment assembly according to one of claims 1 or 2, **characterized in that** the means (34) for locking each shell to the frame (12) are selected from the following list:
- a spring-loaded lever (48) arranged on the shell (20a, 20b) configured to engage with a locking blade (46) arranged on the frame (12);
- a spring-loaded leaf fixed to the shell and configured to automatically lock the shell to the beam of the frame;
- a latch system, a first part of the latch comprising a movable pin arranged on the frame and constrained in extension by a spring, and a second part of the latch comprising a plate comprising a hole and fixed to the shell, said plate being configured to push on the pin until the pin is aligned with the hole in the plate so that the pin engages with the hole by relaxation of the spring;
- a table-type lock, comprising a tube arranged on the shell and an automatic locking latch arranged on the beam and automatically blocking the pin on contact;
- a toggle lock, configured to be locked by an operator operating a lever;
- a shaft arranged on the shell, comprising a groove interacting with a spring-loaded pin arranged on the frame.

4. Interior equipment assembly according to one of claims 1 to 3, **characterized in that** it comprises at least one cover (36) for protecting the locking means (34).

5. Interior equipment assembly according to one of claims 1 to 4, **characterized in that** the frame (12) comprises at least one electrical connector (42) configured for connection to an electrical inlet of the rail vehicle.

6. Interior equipment assembly according to one of claims 1 to 5, **characterized in that** the frame comprises at least one pneumatic connector (42) configured for connection to a pneumatic inlet of the rail vehicle.

7. Interior equipment assembly according to one of claims 1 to 6, **characterized in that** at least one shell comprises a seat (22a, 22b) configured so that a passenger of said vehicle can assume a seated position.

8. Vehicle, in particular railway vehicle, comprising a floor and a wall, **characterized in that** it comprises at least one interior equipment assembly (10) according to one of claims 1 to 7, the foot (16) of the frame of said seat assembly being fixed to the floor of the railway vehicle and means (18) for fixing the beam to a wall of the vehicle are fixed to said wall of the vehicle.

9. A method of installing an interior equipment assembly according to one of claims 1 to 8, **characterized in that** it comprises the following steps:
- a step of positioning the frame (12) in which the foot (16) is placed at ground level, the beam (14) is extended substantially horizontally and the means (18) for securing the beam to the vehicle wall are in contact with said vehicle wall;
- a step for attaching the frame (12) to the vehicle;
- a step of placing each shell (20a, 20b) on the frame beam (14), so that the tongue (32) is engaged with the shoulder (30);
- a step of locking each shell (20a, 20b) to the frame (12) via the locking means (34).

10. A method of installing according to claim 9, **characterized in that** it comprises:
- a step of electrically connecting a first electrical connector of the frame with an electrical inlet of the rail vehicle ;
- a step of electrically connecting the first electrical connector of the frame with a second electrical connector on each shell.

11. A method of installing according to one of claims 9 or 10, **characterized in that** it comprises :
- a step of pneumatically connecting a first pneumatic connector on the frame to a pneumatic inlet on the rail vehicle ;
- a step of pneumatically connecting the first pneumatic connector of the frame with a second pneumatic connector on each shell.
